(19) Europäisches Patentamt
European Patent Office
Office européen des brevets

(11) **EP 4 036 339 A1**

(12) **DEMANDE DE BREVET EUROPEEN**

(43) Date de publication:
**03.08.2022 Bulletin 2022/31**

(21) Numéro de dépôt: **21315015.4**

(22) Date de dépôt: **30.01.2021**

(51) Classification Internationale des Brevets (IPC):
***E04B 1/32*** *(2006.01)* ***E04B 1/58*** *(2006.01)*

(52) Classification Coopérative des Brevets (CPC):
**E04B 1/5831; E04B 1/3211;** E04B 2001/1978;
E04B 2001/1984; E04B 2001/3235;
E04B 2001/3583

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeur: **Canopee Structures
77420 Champs sur Marne (FR)**

(72) Inventeur: **Tellier, Xavier
77420 Champs sur Marne (FR)**

(74) Mandataire: **Touroude & Associates
2, bis rue Alfred Nobel
77420 Marne la Vallée (FR)**

(54) **PROCEDE DE FABRICATION D'UNE STRUCTURE TRIDIMENSIONNELLE DEPLOYABLE A PARTIR D'UN MAILLAGE ALIGNABLE, ET STRUCTURE TRIDIMENSIONNELLE OBTENUE VIA UN TEL PROCEDE**

(57) L'invention concerne un procédé de fabrication d'une structure tridimensionnelle (2) déployable entre une première configuration compacte et au moins une seconde configuration déployée, le procédé de fabrication comprenant :
- une première étape, mise en oeuvre par ordinateur, de génération d'un maillage dit alignable (14) à partir d'un maillage initial à quadrangles discrétisé ; le maillage alignable (14) étant obtenu par déformation des quadrangles du maillage initial ; un maillage étant dit alignable si un tel maillage peut être déformé en une configuration rectilinéaire en modifiant angulairement le maillage au niveau de ses nœuds et en maintenant les longueurs des arêtes constantes ;
- une deuxième étape de fabrication de la structure tridimensionnelle (2) dans sa première configuration compacte, la structure tridimensionnelle (2) étant fabriquée à partir dudit maillage alignable (14) généré et se présentant dans sa première configuration compacte sous la forme d'une préforme quasi-linéaire, en forme de fagot, ladite préforme comportant des poutres élastiquement déformables (11), les nœuds du maillage alignable (14) définissant des positions pour des connecteurs de liaison entre les poutres (11) de la préforme.

Figure 12

**Description**

**Domaine technique**

La présente invention concerne un procédé de fabrication d'une structure tridimensionnelle déployable. Une telle structure tridimensionnelle déployable est typiquement réalisée au moyen d'un maillage de poutres, de telles poutres pouvant être par exemple de type joncs, tubes à section ronde ou rectangulaire, barres à section rectangulaire, profilés à section transversale en « C », cornières, ou composées de plusieurs de ces éléments solidarisés mécaniquement entre eux, formant ainsi une poutre composite. Plus précisément, un tel maillage de poutres élastiques est du type « gridshell élastique ». La présente invention concerne également un produit programme d'ordinateur comportant des instructions pour l'exécution d'au moins une des étapes d'un tel procédé de fabrication, ainsi qu'une structure tridimensionnelle déployable fabriquée via un tel procédé.

De nombreuses applications industrielles de la présente invention, ainsi que de nombreux domaines techniques d'application ont été identifiés, incluant, sans que cette liste ne soit exhaustive, les domaines de la construction, du mobilier urbain ou de l'architecture urbaine, du spatial, de la défense, des engins sous-marins ou encore de l'événementiel ou des spectacles et divertissements.

**Etat de la technique**

La notion de « gridshell élastique » est développée dans le document brevet FR 3 080 390 A1. Un tel « gridshell » peut être défini comme une coque discrète qui est obtenue par déformation élastique d'une grille bidirectionnelle continue, plane ou non, sans rigidité en cisaillement puis rigidifiée par des barres, des câbles ou des diaphragmes selon une troisième direction de l'espace. Ainsi défini, un gridshell a un potentiel structural intéressant et peut répondre à des exigences architecturales complexes.

Les gridshell élastiques constituent ainsi un moyen économique pour concevoir des structures tridimensionnelles allégées. De telles structures tridimensionnelles sont déployables entre une première configuration compacte et au moins une seconde configuration déployée. Classiquement, au cours du procédé d'assemblage d'un gridshell, on assemble sur le sol une grille bidirectionnelle de poutres déformables, reliés entre elles par des moyens de liaison autorisant une variation des angles formés entre ces poutres, sans glissement. La grille est ensuite relevée afin d'atteindre sa forme finale désirée, en utilisant des déformations élastiques sur les poutres, et en agissant concomitamment sur des rotations angulaires au niveau des moyens de liaison entre les poutres (en effet, lors de telles déformations élastiques les angles formés entre les poutres varient). Lorsque l'on souhaite conserver la forme tridimensionnelle obtenue, il faut alors contreventer le réseau en fixant par exemple des cerclages, entretoises ou câbles additionnels sur les poutres formant le maillage, ayant pour effet de figer certains quadrangles du maillage dans leur configuration déformée. De telles structures tridimensionnelles sont alors constituées d'un matériau flexible, mais offrant une certaine rigidité obtenue à travers leur forme.

Le matériau flexible formant les poutres déformables peut être par exemple un composite, tel qu'un composite à matrice polymère renfermant des fibres de verre, fabriqué par exemple par pultrusion ; ou encore un matériau en bois ou en métal.

Les gridshell élastiques se divisent classiquement en deux familles : les gridshell à grilles régulières et les gridshell à grilles irrégulières.

Dans les gridshell à grilles régulières, la distance entre les nœuds de connexions du maillage est constante. Plus précisément, sur chaque poutre donnée, la distance entre les connexions adjacentes de la poutre est constante. Autrement dit, le maillage présente une longueur d'arêtes constante. Ceci garantit que la structure peut être assemblée au niveau du sol dans une configuration sans contraintes. Toutefois, un inconvénient que pose ce type de structures à grilles régulières est qu'elles imposent une forte contrainte de conception sur la modélisation.

Le fait de présenter une longueur d'arêtes constante n'est cependant pas suffisant pour qu'un maillage puisse décrire un gridshell : les forces internes au sein de la structure représentée par ce maillage doivent en effet être en équilibre. A cet effet, une étape consistant à relâcher des contraintes sur la géométrie peut être effectuée. Toutefois, une autre contrainte mécanique est que la courbure des poutres est limitée par l'élasticité du matériau. Le problème sous-jacent consiste à évaluer comment la grille est étalée sur une surface mathématique tridimensionnelle correspondante. La recherche d'une orientation de grille optimale a par exemple été effectuée dans des travaux de recherche de Lina Bouhaya et al. (« Optimization of gridshell bar orientation using a simplified genetic approach » - 2014). Sur certaines surfaces, la contrainte consistant à avoir en même temps une grille régulière et une faible courbure de poutres peut aboutir à un problème sur-contraint. Ceci a amené à des recherches sur les gridshell à grilles irrégulières (autrement dit à longueur d'arêtes non constante dans le maillage).

Par exemple, dans les travaux de Lafuente Hernandez et al (« Topology optimisation of regular and irregular elastic gridshells by means of a non-linear variational method » - 2012; et « On the Design and Construction of Elastic Gridshells with Irregular Meshes » - 2013), les auteurs proposent de traiter la longueur d'arêtes constante comme une contrainte molle dans une boucle d'optimisation, qui minimise également la courbure des poutres et la proximité à une surface-cible. Le système peut alors être amené dans une configuration quasi plane, mais les poutres doivent être maintenues en force à leur place en vue d'être assemblées dans une grille.

Les structures à grilles irrégulières offrent une vaste liberté de conception. Toutefois, une limitation actuelle de telles structures à grilles irrégulières est leur processus de conception. En effet, le fait de pouvoir garantir que les formes obtenues par ces grilles irrégulières soient dans un état dans lequel les grilles soient faciles à assembler a été assuré jusqu'ici par des outils numériques complexes, et qui sont loin d'être intuitifs pour un utilisateur. La plupart des méthodes connues jusqu'ici, qui utilisent des grilles irrégulières pour la conception du gridshell, mettent ainsi en œuvre une modélisation et une simulation complètes du mouvement de déploiement de ce dernier. Ceci implique des calculs complexes et chronophages de la part de l'ordinateur sur lequel est effectué l'étape préalable de conception de la structure.

Il existe donc un besoin de pouvoir disposer de structures tridimensionnelles déployables basées sur des grilles irrégulières, qui présentent une forte résistance structurelle tout en étant compactes et faciles à déployer et à transporter, et dont la méthode de conception soit simple et réduise les ressources informatiques consommées.

**Résumé de l'invention**

Un but de la présente invention est de pallier au moins partiellement les inconvénients précités.

En particulier, un premier objectif de la présente invention est de fournir un procédé de fabrication d'une structure tridimensionnelle déployable, qui permette d'obtenir simplement une structure tridimensionnelle compacte présentant une forte résistance structurelle combinée à une facilité de déploiement et de transport.

Un deuxième objectif est de proposer un procédé de fabrication d'une structure tridimensionnelle déployable qui, en utilisant une grille irrégulière, permette d'atteindre de toutes nouvelles formes géométriques pour la structure, aboutissant ainsi à une large variété de formes possibles.

Un troisième objectif est de proposer un procédé de fabrication d'une telle structure tridimensionnelle déployable qui permette de réduire les ressources informatiques consommées pendant l'étape de conception de la structure.

A cet effet, l'invention concerne un procédé de fabrication d'une structure tridimensionnelle, ladite structure tridimensionnelle étant déployable entre une première configuration compacte et au moins une seconde configuration déployée, le procédé de fabrication comprenant :

- une première étape, mise en œuvre par ordinateur, de génération d'un maillage, le maillage comprenant une pluralité de quadrangles discrétisés, et un nombre prédéterminé de nœuds reliés entre eux par des arêtes orientées, une orientation prédéterminée étant attribuée à chaque arête parmi deux orientations possibles, chaque quadrangle élémentaire du maillage présentant une première paire d'arêtes opposées orientées selon une première orientation, et une seconde paire d'arêtes opposées orientées selon une seconde orientation, distincte de la première orientation ;
- une deuxième étape de fabrication de la structure tridimensionnelle, la structure tridimensionnelle étant fabriquée à partir du maillage généré à l'issue de la première étape ; la structure tridimensionnelle se présentant dans sa première configuration compacte sous la forme d'une préforme, ladite préforme comportant des poutres élastiquement déformables.

Selon l'invention, le maillage généré au cours de la première étape est un maillage dit alignable, un maillage à quadrangles discrétisé étant dit alignable si un tel maillage peut être déformé en une configuration rectilinéaire en modifiant angulairement le maillage au niveau de ses noeuds et en maintenant les longueurs des arêtes constantes, ou encore si, pour tout chemin orienté parcouru le long d'une boucle fermée et composé de segments de chemin orientés $\{e_1, ..., e_n\}$, où chaque segment coïncide avec une arête du maillage, l'équation suivante est vérifiée pour ce chemin :

$$\sum_{i=1}^{n} \varepsilon_i \, \|e_i\| = 0 \quad (1) \; ;$$

avec : $\varepsilon_i$ = +1 si le segment $e_i$ a la même orientation que l'arête coïncidente du maillage, et $\varepsilon_i$ = -1 sinon ; $\|e_i\|$ étant la longueur du segment $e_i$ ;
les nœuds du maillage alignable définissant des positions pour des connecteurs de liaison entre les poutres de la préforme, lesdits connecteurs permettant de relier les poutres entre elles lors de l'étape de fabrication de la structure, la préforme étant dans sa configuration compacte quasi-linéaire, en forme de fagot.

Dans la suite de la description, le terme « poutre » désigne tout élément structurel longitudinal dont la longueur est plus grande que la largeur, par exemple, sans que cette liste ne soit exhaustive, un jonc, un tube à section ronde ou rectangulaire, une barre à section rectangulaire, un profilé à section transversale en « C » ou encore une cornière.

La configuration potentiellement rectilinéaire obtenue pour le maillage alignable correspond sensiblement à la forme quasi-linéaire obtenue pour la structure tridimensionnelle dans sa première configuration compacte. En effet la configuration rectilinéaire « pure » est inatteignable pour la structure en raison de l'épaisseur non-nulle des poutres qui la composent. Par « configuration rectilinéaire » on entend une configuration d'un maillage dans lequel tous les noeuds se trouvent sur une même droite. Par forme « quasi-linéaire » on entend toute forme géométrique quasi-rectiligne ou quasi-curviligne, en forme de fagot, dont le diamètre est très faible par rapport à la longueur de l'ensemble, typiquement dont le rapport diamètre/longueur est sensiblement inférieur à 1/5ème.

La préforme quasi-linéaire en forme de fagot peut être tubulaire, c'est-à-dire définissant une forme géométrique refermée sur elle-même. Dans le cadre de la présente invention, le terme « tubulaire » désigne en effet non seulement une forme tubulaire simple, mais aussi plus généralement toute topologie de maillage refermé sur lui-même et présentant une ouverture à chacune de ses extrémités. En variante, la préforme quasi-linéaire en forme de fagot peut très bien être non tubulaire.

Le procédé de fabrication selon l'invention permet avantageusement d'obtenir de manière simple une structure tridimensionnelle compacte présentant une forte résistance structurelle combinée à une facilité de déploiement et de transport. Il permet en outre d'atteindre de toutes nouvelles formes géométriques pour la structure, non encore obtenues via les procédés de fabrication de l'art antérieur. De telles formes géométriques s'appuient sur l'obtention de maillages discrétisés dits alignables, qui forment des grilles irrégulières et sont générés à l'issue de la première étape du procédé.

Par ailleurs, contrairement aux procédés de l'art antérieur, le procédé selon l'invention n'effectue pas une simulation complète du mouvement de déploiement du gridshell irrégulier, mais garantit le caractère déployable de ce dernier via une contrainte locale simple. Ceci permet de réduire substantiellement la complexité combinatoire des calculs effectués par l'ordinateur, sans nuire au caractère déployable et structurellement résistant de la structure. Un gain substantiel d'espace mémoire et une réduction des ressources informatiques utilisées pour les calculs sont ainsi obtenus. Ces différents avantages et effets techniques sont indifférents à la sémantique des données utilisées.

Selon une caractéristique technique particulière de l'invention, le maillage alignable est généré à partir d'un maillage initial à quadrangles discrétisé, et le maillage alignable est obtenu par déformation des quadrangles du maillage initial à quadrangles discrétisé.

En particulier, et selon un premier mode de réalisation de l'invention, la première étape de génération consiste en une méthode d'optimisation numérique basée sur des projections itératives sur ledit maillage initial à quadrangles discrétisé, une desdites projections étant effectuée quadrangle après quadrangle au moyen d'un opérateur de projection apte à déformer tout quadrangle en un quadrangle dit alignable, un quadrangle étant dit alignable si, pour un chemin orienté parcouru le long d'une boucle fermée coïncidant avec les arêtes du quadrangle, ladite équation (1) est vérifiée. Cette projection effectuée par l'opérateur de projection peut être utilisée simultanément avec d'autres projections, permettant en particulier de contrôler la position des sommets représentant les points d'ancrages de la structure, de modéliser le comportement flexionnel et torsionnel des poutres, de limiter les variations de longueurs d'arête, et de faire en sorte que le maillage soit proche d'une surface de référence.

Avantageusement, au cours de la première étape de génération, une des projections itératives est effectuée sur le maillage initial à quadrangles discrétisé au moyen en outre d'un opérateur de projection additionnel, ledit opérateur additionnel étant apte à déformer tout maillage à quadrangles discrétisé de sorte que les arêtes du maillage correspondent à des lignes pseudo-géodésiques, une ligne pseudo-géodésique étant définie comme une ligne sur une surface de référence dont l'angle entre le plan osculateur et la normale à la surface est identique en chaque point, le maillage obtenu à l'issue de la première étape de génération étant un maillage alignable constitué d'arêtes qui suivent des lignes pseudo-géodésiques, les poutres de la structure tridimensionnelle étant des profilés ou des barres dont le moment d'inertie de section est beaucoup plus important selon un axe que selon un autre, par exemple des barres plates. De telles barres sont disposées, au cours de la deuxième étape, de manière à suivre les lignes pseudo-géodésiques définies par le maillage alignable. Ceci permet d'obtenir une structure tridimensionnelle qui se déploie naturellement et facilement vers sa seconde configuration déployée, quasiment « toute seule », en minimisant le recours à des supports temporaires de types tirants, câbles ou échafaudages qui sont généralement nécessaires pour accompagner le déploiement d'une telle structure vers sa configuration finale déployée. Le déploiement de la structure vers sa forme tridimensionnelle finale est ainsi grandement facilité.

Selon un deuxième mode de réalisation de l'invention, la première étape de génération comporte une phase consistant en une méthode de minimisation algorithmique d'une fonction ayant plusieurs variables et plusieurs termes, les variables de ladite fonction étant la géométrie du maillage initial à quadrangles discrétisé, l'un des termes de la fonction étant une énergie représentative du caractère alignable du maillage, par exemple une énergie définie de la manière suivante :

$$E_{alignable} = \sum_{quadrangles} (P_{i,j} P_{i+1,j} + P_{i+1,j}P_{i+1,j+1} - P_{i,j}P_{i,j+1} - P_{i,j+1}P_{i+1,j+1})^2$$

(3) ;

les nœuds du maillage étant indexés $\{P_{i,j}, (i,j) \in I, I \subset Z^2\}$, le minimum de ladite énergie étant atteint si le maillage est alignable, chacun des autres termes de la fonction étant représentatif de propriétés géométriques ou mécaniques souhaitées pour la structure tridimensionnelle.

Selon une caractéristique technique particulière de l'invention, si le maillage initial à quadrangles discrétisé est simplement connexe, autrement dit s'il est dépourvu de trous de maillage, et que tous ses nœuds intérieurs sont reliés à exactement quatre arêtes, les nœuds étant indexés $\{P_{i,j}, (i,j) \in I, I \subset Z^2\}$, alors le maillage généré est dit alignable si, pour tout quadrangle élémentaire du maillage ayant des sommets $P_{i,j}$, $P_{i+1,j}$, $P_{i+1,j+1}$, $P_{i,j+1}$, les longueurs des arêtes dudit quadrangle vérifient l'équation suivante :

$$P_{i,j}P_{i+1,j} + P_{i+1,j}P_{i+1,j+1} = P_{i,j}P_{i,j+1} + P_{i,j+1}P_{i+1,j+1} \text{ (2) ;}$$

lesdits sommets étant des nœuds du maillage.

Selon une autre caractéristique technique particulière de l'invention, le maillage alignable et/ou le maillage initial à quadrangles discrétisé sont des maillages tridimensionnels.

Selon une autre caractéristique technique particulière de l'invention, le maillage initial à quadrangles discrétisé est un maillage à symétrie de révolution ou un maillage de Tchebychev, en particulier du type maillage plan de Tchebychev. Un tel maillage de Tchebychev est un maillage présentant une longueur d'arêtes constante.

Selon un autre mode de réalisation de l'invention, la première étape de génération d'un maillage alignable comprend une première phase consistant à définir une première ligne pseudo-géodésique sur une surface de révolution, une ligne pseudo-géodésique étant définie comme une ligne sur une surface de référence dont l'angle entre le plan osculateur et la normale à la surface est identique en chaque point ; une deuxième phase consistant à dupliquer la première ligne pseudo-géodésique par rotation autour de l'axe de révolution de la surface de révolution, fournissant ainsi un premier ensemble de lignes pseudo-géodésiques, et une troisième phase consistant à symétriser les lignes pseudo-géodésiques obtenues lors de la seconde phase par rapport à un plan contenant ledit axe de révolution, fournissant un deuxième ensemble de lignes pseudo-géodésiques ; les premier et deuxième ensembles de lignes pseudo-géodésiques constituant le maillage alignable.

Avantageusement, le procédé comprend en outre, avant la deuxième étape, une étape intermédiaire, mise en œuvre par ordinateur, comprenant une première phase de modélisation d'éléments additionnels tels que des contreventements, entretoises ou câbles additionnels présents sur la structure, et une seconde phase de relâchement d'une ou plusieurs contrainte(s) portant sur la géométrie du maillage alignable, afin d'obtenir une géométrie de maillage permettant d'atteindre un équilibre structurel prenant en compte lesdits éléments additionnels ; cette étape intermédiaire étant effectuée à la suite ou en parallèle de la première étape. Cette étape intermédiaire permet de garantir l'équilibre mécanique de la structure dans sa seconde configuration déployée. Une telle étape intermédiaire est particulièrement importante si la structure tridimensionnelle nécessite beaucoup de contreventements, de câbles et/ou d'entretoises. Elle permet en effet de prendre en compte la présence de ces éléments.

Avantageusement, la seconde phase de relâchement d'une ou plusieurs contrainte(s) portant sur la géométrie du maillage alignable comprend la mise en œuvre d'un modèle de mécanique des poutres, en particulier un modèle de dynamiques projectives, de relaxation dynamique ou d'éléments finis de la mécanique des poutres tel que par exemple un modèle prenant en compte le comportement axial, la torsion et la flexion biaxiale ; et/ou la mise en œuvre d'un modèle pour imposer des contraintes de position aux bords. L'utilisation d'un ou de plusieurs de ces modèle(s) permet notamment de modéliser les poutres comme des objets ayant une raideur axiale, et de prendre ainsi en compte leur résistance mécanique, ainsi que d'obtenir un maillage alignable avec des bords ayant une position prédéterminée.

Selon une caractéristique technique particulière de l'invention, le procédé comprend en outre, après la deuxième étape, une étape finale d'application à la préforme de déformations permettant d'atteindre une forme finale évasée souhaitée, correspondant à la seconde configuration déployée de la structure tridimensionnelle, ladite étape d'application comprenant les phases suivantes :

- on relie la partie supérieure de la préforme au sol par des tirants de manière à maintenir la forme évasée de la structure pendant la mise en place de cerclages et/ou entretoises et/ou câbles, ou bien
- on appuie ladite préforme sur le sol de manière qu'une partie évasée de la préforme soit posée sur le sol, puis on met en place des cerclages et/ou entretoises et/ou câbles, puis on retourne la structure de sorte que sa partie évasée soit située vers le haut.

Selon un autre aspect, l'invention concerne également un produit programme d'ordinateur téléchargeable depuis un réseau de communication et/ou enregistré sur un support lisible par ordinateur et/ou exécutable par un processeur, le produit programme d'ordinateur comprenant des instructions de programme, lesdites instructions de programme mettant en œuvre au moins l'étape de génération du maillage alignable du procédé tel que décrit ci-dessus lorsque lesdites instructions sont exécutées sur une unité de traitement d'un dispositif informatique.

Un tel produit programme d'ordinateur présente notamment l'avantage de pouvoir être incorporé typiquement dans un outil générique de conception de formes, et ne nécessite pas de devoir disposer de son propre environnement d'optimisation pour pouvoir fonctionner. Un tel produit programme d'ordinateur fournit ainsi une solution particulièrement intuitive pour permettre l'obtention de structures tridimensionnelles déployables présentant une large variété de formes géométriques.

Selon un autre aspect, l'invention concerne également une structure tridimensionnelle déployable entre une première configuration compacte et une seconde configuration déployée, la structure tridimensionnelle comprenant des poutres élastiquement déformables reliées entre elles par des connecteurs de liaison, la structure tridimensionnelle étant fabriquée via le procédé tel que décrit ci-dessus, la structure tridimensionnelle formant un élément parmi le groupe consistant en : un élément de mobilier urbain ou d'architecture urbaine, un module de satellite ou d'engin spatial, un module de sous-marin, un abri temporaire ou non, un élément décoratif de spectacle et/ou de divertissement, un jouet, un support (par exemple pour végétation ou panneau solaire), une armature de coque de béton armé, et un coffrage permanent ou temporaire pour coque de béton. Dans le cas d'une armature de coque de béton armé, la structure tridimensionnelle selon l'invention peut en effet être utilisée pour fabriquer une armature courbe, de telles armatures courbes étant généralement difficiles à obtenir dans le domaine du bâtiment. Dans le cas d'un coffrage pour coque de béton, la structure tridimensionnelle selon l'invention peut servir avantageusement de support temporaire, le temps que le béton sèche.

Avantageusement, chaque connecteur de liaison au sein de la structure est un connecteur reliant deux poutres et autorisant une rotation entre ces deux poutres selon un seul degré de liberté. Ceci permet, lorsque le procédé de fabrication de la structure comporte une phase intermédiaire consistant à faire en sorte, durant la première étape, que le maillage alignable généré soit constitué d'arêtes qui suivent des lignes pseudo-géodésiques, de faciliter encore le déploiement de la structure vers sa forme tridimensionnelle finale.

Selon une caractéristique technique particulière de l'invention, chaque connecteur de liaison au sein de la structure est constitué de deux pièces montées pivotantes l'une par rapport à l'autre autour d'un axe commun, les deux pièces étant agencées l'une sur l'autre et étant traversées par l'axe, chaque pièce étant configurée pour recevoir et maintenir une poutre, par exemple au moyen d'une fente oblique de réception et de maintien ménagée dans la pièce, chaque pièce affectant une géométrie de cale biaise percée.

Selon une autre caractéristique technique particulière de l'invention, chaque connecteur de liaison au sein de la structure est un connecteur reliant deux poutres et autorisant une rotation entre ces deux poutres selon trois degrés de liberté, chaque connecteur étant formé d'un axe et de deux cales biaises, les deux cales biaises étant positionnées entre les poutres et étant traversées par l'axe, chaque cale biaise supportant une des poutres et étant configurée pour pouvoir tourner en rotation par rapport à ladite poutre.

Selon une autre caractéristique technique particulière de l'invention, la structure tridimensionnelle est maintenue par des moyens sélectionnés dans le groupe comprenant des cerclages, des entretoises, des dispositifs de liaison de poutres, et des câbles.

Selon un autre aspect, l'invention concerne également un groupe de structures tridimensionnelles reliées entre elles, au moins une des structures tridimensionnelles étant telle que décrite ci-dessus, les structures étant de préférence reliées entre elles dans leur zone de plus grande envergure.

## Brève description des figures

Les buts, avantages et caractéristiques du procédé de fabrication d'une structure tridimensionnelle déployable selon l'invention, apparaîtront mieux dans la description suivante sur la base d'au moins une forme d'exécution non limitative illustrée par les dessins sur lesquels :

[Fig. 1] est une représentation schématique d'un ordinateur, comprenant une unité de traitement et des moyens mémoire stockant une application apte à mettre en œuvre moins une des étapes d'un procédé de fabrication selon l'invention ;
[Fig. 2] est un organigramme représentant le procédé de fabrication d'une structure tridimensionnelle déployable selon un mode de réalisation de l'invention ;
[Fig. 3] est une représentation schématique d'une étape particulière du procédé de la figure 2, illustrant la représentation d'un chemin orienté parcouru le long d'une boucle fermée et composé de segments de chemin orientés, où chaque segment coïncide avec une arête d'un maillage ;

[Fig. 4] est une représentation schématique d'une étape particulière du procédé de la figure 2, illustrant un quadrangle alignable dans un maillage à quadrangles simplement connexe ;

[Fig. 5] est une représentation schématique d'une étape particulière du procédé de la figure 2, illustrant des déformations effectuées par un opérateur de projection sur un quadrangle quelconque pour le rendre alignable ;

[Fig. 6] est une représentation schématique de lignes pseudo-géodésiques alignables sur une sphère ;

[Fig. 7] est une représentation schématique d'une étape particulière du procédé de la figure 2, illustrant la génération de lignes pseudo-géodésiques discrètes ;

[Fig. 8] est une vue en perspective d'une poutre de la structure tridimensionnelle déployable et d'une partie d'un connecteur de liaison selon un premier exemple de réalisation particulier, un tel connecteur autorisant une rotation entre les deux poutres selon un seul degré de liberté ;

[Fig. 9] est une vue en perspective d'un ensemble de deux poutres de la structure tridimensionnelle déployable, assemblées via le connecteur de liaison selon l'exemple de réalisation de la figure 8 ;

[Fig. 10] est une vue en perspective d'un ensemble de deux poutres de la structure tridimensionnelle déployable, assemblées via un connecteur de liaison selon un deuxième exemple de réalisation particulier ;

[Fig. 11] est une vue en perspective d'un ensemble de quatre profilés de la structure tridimensionnelle déployable, assemblés via un connecteur de liaison selon un troisième exemple de réalisation particulier ;

[Fig. 12] représente en perspective un premier exemple de structure tridimensionnelle déployable obtenue via le procédé de fabrication selon l'invention, vue en superposition à la fois dans sa première configuration compacte et dans sa seconde configuration déployée ;

[Fig. 13] est une vue de dessus du premier exemple de structure tridimensionnelle déployable, dans sa seconde configuration déployée ;

[Fig. 14] représente en perspective un deuxième exemple de structure tridimensionnelle déployable obtenue via le procédé de fabrication selon l'invention, vue en superposition à la fois dans sa première configuration compacte et dans sa seconde configuration déployée ;

[Fig. 15] est une vue de dessus du deuxième exemple de structure tridimensionnelle déployable, dans sa seconde configuration déployée illustrée à la figure 14 ; et

[Fig. 16] représente en perspective un troisième exemple de structure tridimensionnelle déployable obtenue via le procédé de fabrication selon l'invention.

## Description détaillée de l'invention

Dans la suite de la description, on entend par « ordinateur » tout dispositif électronique structuré selon une architecture de type « von Neumann », et muni d'une unité de traitement de données, ainsi que de moyens de stockage de données, tel que par exemple un ordinateur de bureau, un ordinateur portable, un appareil de communication sans fil tel qu'un smartphone, ou encore une tablette numérique, sans que cette liste ne soit exhaustive.

On entend en outre par « quadrangle » toute figure géométrique fermée, plane ou non, ayant quatre sommets et quatre arêtes reliant ces sommets.

On entend en outre par « arête » toute ligne droite ou courbe reliant deux sommets d'un quadrangle.

On entend également par « maillage de Tchebychev » tout maillage à quadrangles discrétisé présentant une longueur d'arêtes constante.

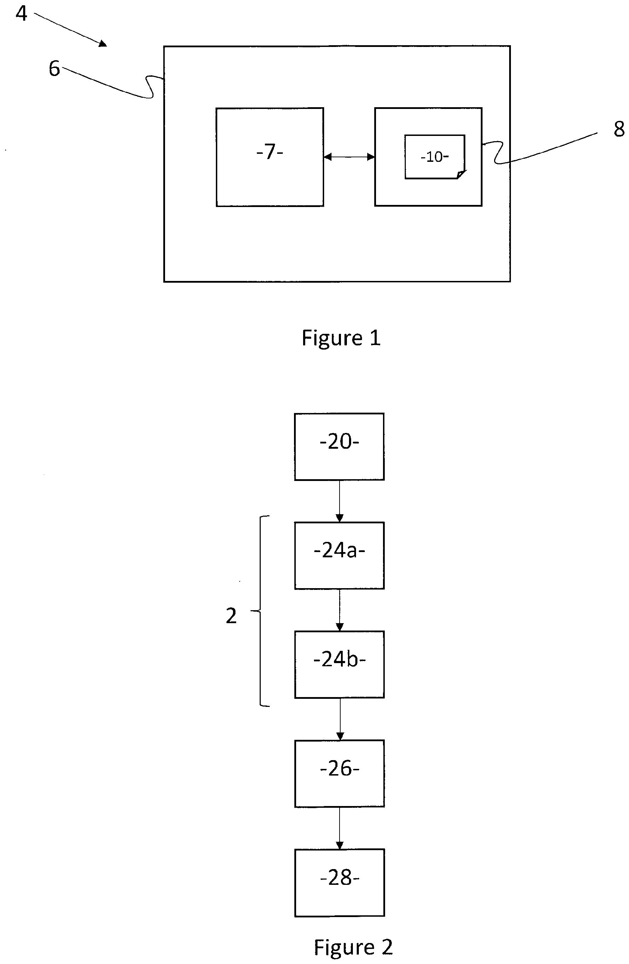

Dans la suite, il est divulgué en particulier un procédé de fabrication d'une structure tridimensionnelle déployable 2. Un ordinateur 4 est représenté schématiquement sur la figure 1. L'ordinateur 4 est muni d'une unité de traitement 6. L'unité de traitement 6 comprend par exemple un processeur 7 et des moyens de mémorisation 8 reliés au processeur 7. Les moyens de mémorisation 8 stockent une application 10.

L'application 10 est apte à être exécutée par le processeur 7 de l'unité de traitement 6, et comporte des instructions pour l'exécution d'au moins une étape du procédé de fabrication selon l'invention, comme cela sera détaillé par la suite. L'application 10 est par exemple une application téléchargeable, via une plateforme de téléchargement non représentée sur les figures.

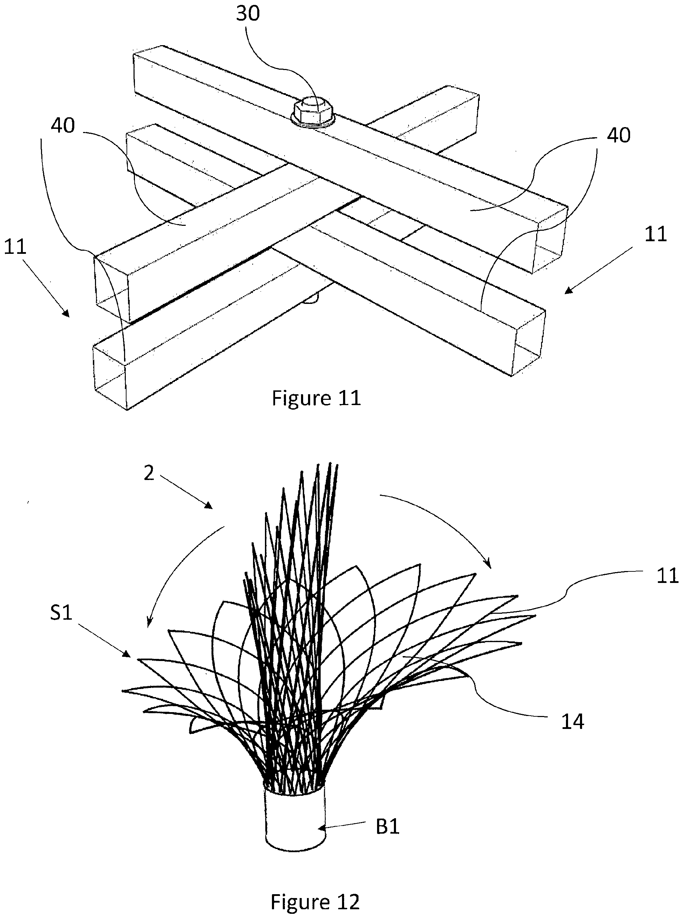

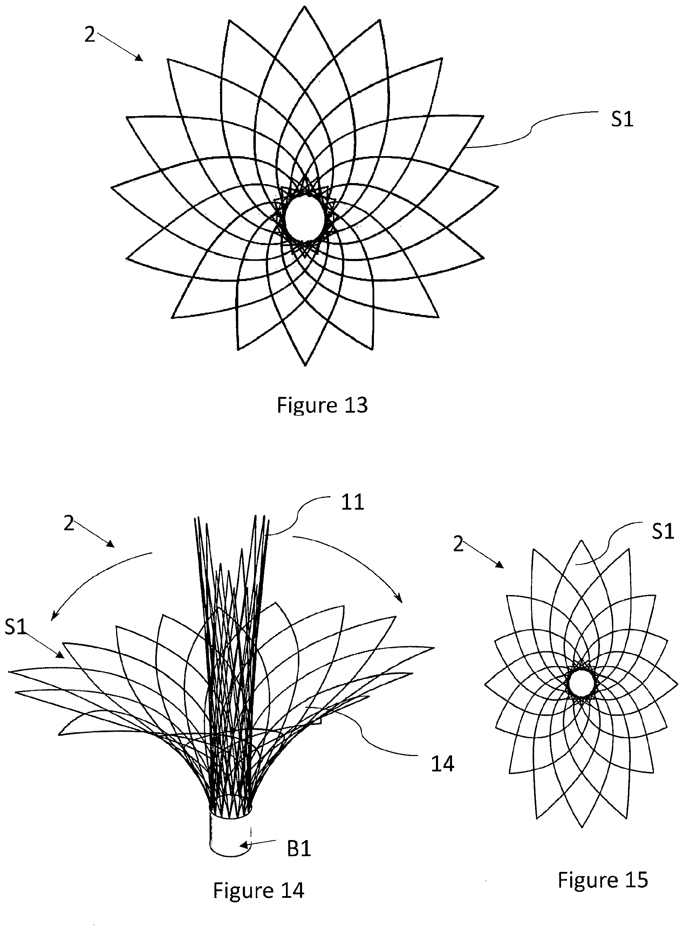

Comme illustré sur les figures 12 à 16, la structure tridimensionnelle 2 est un gridshell élastique comportant un ensemble de poutres élastiquement déformables 11, comme cela sera détaillé par la suite. Les poutres 11 sont reliées entre elles de manière à réaliser un maillage 14. La structure tridimensionnelle 2 est déployable entre une première configuration compacte, représentée par exemple sur les figures 12 et 14, et au moins une seconde configuration déployée, une telle configuration déployée étant représentée notamment sur les figures 12 à 16. La structure 2 forme par exemple un élément choisi parmi le groupe consistant en : un élément de mobilier urbain ou d'architecture urbaine, un module de satellite ou d'engin spatial, un module de sous-marin, un abri temporaire ou non, un jouet, un support (par exemple pour végétation, panneau solaire, voûte de maçonnerie), un élément décoratif de spectacle et/ou de divertissement, une armature de coque de béton armé, et un coffrage permanent ou temporaire pour coque de béton ; sans que cette liste ne soit limitative. En variante en effet, la structure 2 peut former tout autre type d'élément qui n'est pas listé ci-dessus.

Le procédé de fabrication de la structure tridimensionnelle déployable 2 selon l'invention va maintenant être décrit en détail, notamment en référence à la figure 2. On suppose qu'initialement l'application 10 est exécutée par le processeur 7 de l'unité de traitement 6.

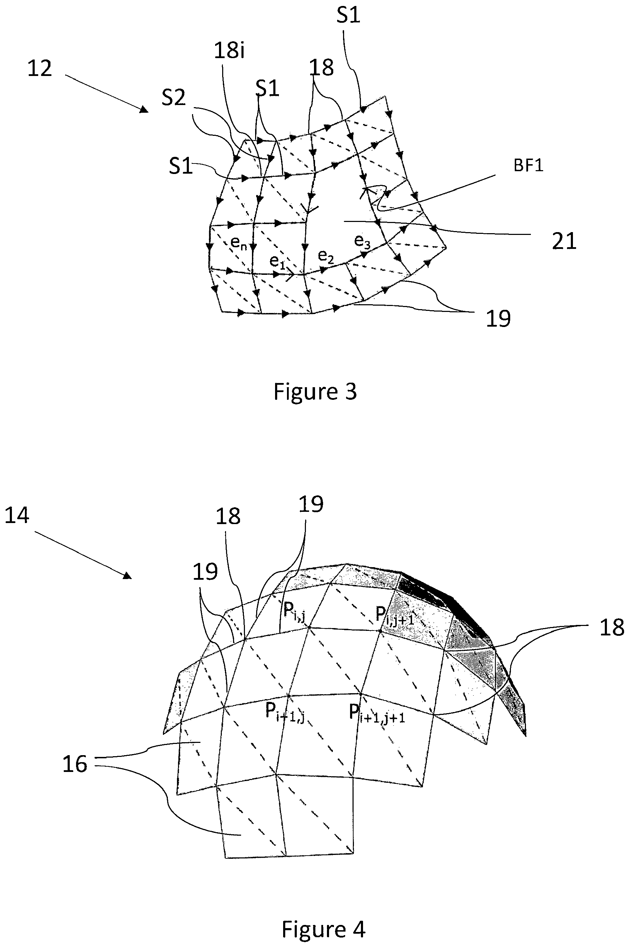

Le procédé comporte une étape initiale 20, mise en œuvre par l'unité de traitement 6 de l'ordinateur 4, au cours de laquelle un maillage dit alignable 14 est généré. Selon un mode de réalisation particulier de l'invention, le maillage alignable 14 est généré à partir d'un maillage initial à quadrangles discrétisé 12. Un tel exemple de maillage initial à quadrangles discrétisé 12 (appelé par la suite maillage initial 12) est visible sur la figure 3. Outre les quadrangles 16, le maillage initial 12 comprend également un nombre prédéterminé de nœuds reliés 18 entre eux par des arêtes 19. Les arêtes 19 sont préférentiellement dans ce cas des arêtes droites. Le maillage alignable 14 est obtenu par déformation des quadrangles 16 du maillage initial 12. De préférence, cette déformation des quadrangles 16 est effectuée par l'application 10 quadrangle après quadrangle, comme cela sera détaillé par la suite. Le maillage initial 12 et le maillage alignable 14 sont préférentiellement des maillages tridimensionnels, bien qu'en variante des maillages bidimensionnels puissent également être utilisés. Selon un exemple de réalisation particulier de l'invention, le maillage initial 12 est un maillage de Tchebychev, en particulier du type maillage plan de Tchebychev. D'autres maillages initiaux 12 peuvent être utilisés, tels que par exemple des maillages de révolution (à symétrie de révolution) ou des maillages de translation. Cependant, ceci n'est nullement limitatif dans le cadre du procédé objet de la présente invention et la première étape 20 de ce dernier s'applique de la même manière à tout maillage initial 12, discrétisé, à quadrangles quelconques.

Comme illustré sur la figure 3, l'application 10 attribue à chaque arête 19 une orientation prédéterminée choisie parmi deux orientations possibles S1, S2. Les arêtes 19 du maillage 12, 14 sont orientées de manière cohérente. Chaque quadrangle élémentaire 16 du maillage 12, 14 présente une première paire d'arêtes opposées 19a orientées selon une première orientation S1, et une seconde paire d'arêtes opposées 19b orientées selon une seconde orientation S2, distincte de la première orientation S1. En outre, chaque nœud intérieur 18 du maillage 12, 14 est connecté à quatre arêtes 19, les arêtes d'une paire d'arêtes opposées vis-à-vis de ce nœud 18 ayant la même orientation S1, S2. Ceci est visible sur la figure 3 pour un nœud particulier 18i, mais s'applique de la même manière pour tous les nœuds intérieurs du maillage 12, 14. Cette propriété impose une orientation continue et cohérente des arêtes 19 au sein du maillage 12, 14. De manière générale, et comme illustré sur la figure 3, des trous de maillage 21 peuvent exister au sein du maillage 12, 14.

Un maillage à quadrangles discrétisé 14 est dit alignable si, pour tout chemin orienté parcouru le long d'une boucle fermée BF1 et composé de segments de chemin orientés $(e_1, ..., e_n)$, où chaque segment coïncide avec une arête 19 du maillage 14, l'équation suivante est vérifiée pour ce chemin :

$$\sum_{i=1}^{n} \varepsilon_i \, \|e_i\| = 0 \quad (1) ;$$

avec : $\varepsilon_i$ = +1 si le segment $e_i$ a la même orientation que l'arête coïncidente 19 du maillage, et $\varepsilon_i$ = -1 sinon. $\|e_i\|$ est la longueur du segment $e_i$. Les segments de chemin $\{e_1, ..., e_n\}$ sont bien entendu orientés dans le même sens le long de la boucle fermée BF1.

Autrement dit, le maillage 14 est dit alignable si un tel maillage peut être déformé en une configuration rectilinéaire en modifiant angulairement le maillage 14 au niveau de ses nœuds 18 et en maintenant les longueurs des arêtes 19 constantes. Le caractère alignable d'un maillage est une propriété purement métrique, et est ainsi conservé par déformations isométriques du maillage.

Dans le cas particulier où le maillage 14 est simplement connexe, autrement dit s'il est dépourvu de trous de maillage 21 et que tous ses nœuds intérieurs 18 sont reliés à exactement quatre arêtes 19, une définition alternative (purement locale) du caractère alignable du maillage 14 peut être donnée. Une telle situation est représentée à la figure 4. Les nœuds 18 du maillage 14 sont indexés $\{P_{i,j}, (i,j) \in I, I \subset Z^2\}$. Le maillage 14 est alors dit alignable si, pour tout quadrangle élémentaire 16 du maillage 14 ayant des sommets $P_{i,j}$, $P_{i+1,j}$, $P_{i+1,j+1}$, $P_{i,j+1}$, les longueurs des arêtes 19 de ce quadrangle vérifient l'équation suivante :

$$P_{i,j}P_{i+1,j} + P_{i+1,j}P_{i+1,j+1} = P_{i,j}P_{i,j+1} + P_{i,j+1}P_{i+1,j+1} \quad (2) ;$$

Les sommets $P_{i,j}$, $P_{i+1,j}$, $P_{i+1,j+1}$, $P_{i,j+1}$ du quadrangle 16 font bien entendu partie des nœuds 18 du maillage 14.

Si le maillage 14 est alignable, pour tout quadrangle 16 du maillage l'équation (2) est vérifiée : elle est obtenue en appliquant l'équation (1) sur la boucle fermée formée des quatre arêtes du quadrangle. Réciproquement, pour un maillage 14 alignable et simplement connexe, si pour une boucle fermée donnée, chaque quadrangle 16 inclus dans la boucle vérifie l'équation (2), on obtient l'équation (1) en additionnant les équations (2) de chaque quadrangle 16.

Selon un premier mode de réalisation de l'invention, la première étape de génération 20 consiste en une méthode d'optimisation numérique, effectuée par l'application 10, et basée sur des projections itératives sur le maillage initial à quadrangles discrétisé 12. Par « projection » on entend toute opération géométrique, effectuée au moyen d'un ou plusieurs opérateurs de projection, qui déplace des noeuds de maillage initiaux, associés à une ou plusieurs contrainte(s) géométrique(s) prédéterminée(s), vers des nouvelles positions (positions finales des nœuds) dans lesquelles ces nœuds satisfont à la ou les contrainte(s) géométrique(s) en question.

Selon ce premier mode de réalisation, une de ces projections itératives est effectuée quadrangle 16 après quadrangle 16 au moyen d'un opérateur de projection apte à déformer tout quadrangle en un quadrangle dit alignable. Un quadrangle 16 est dit alignable si, pour un chemin orienté parcouru le long d'une boucle fermée coïncidant avec les arêtes 19 du quadrangle 16, l'équation (1) est vérifiée. Comme vu précédemment, dans le cas particulier où le maillage 14 est simplement connexe, un quadrangle 16 est dit alignable si l'équation (2) est vérifiée pour ce quadrangle.

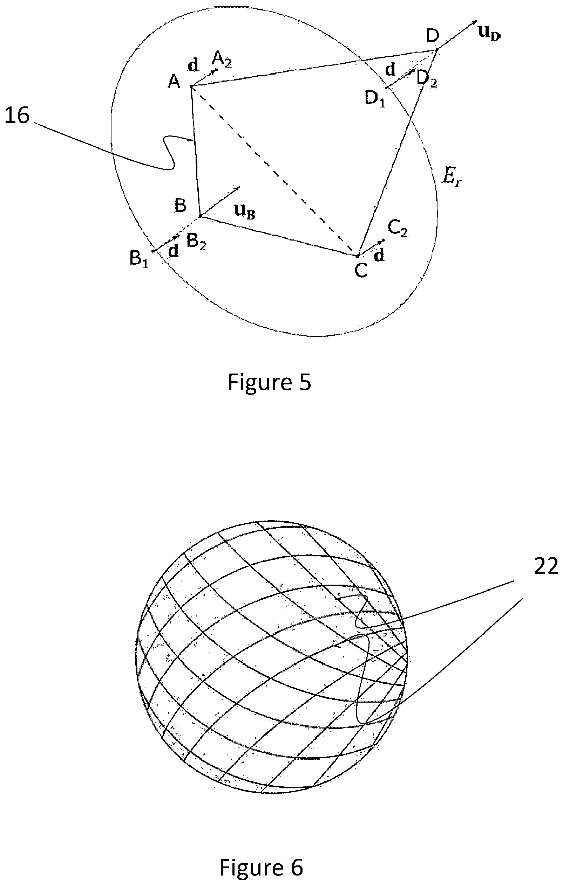

Par exemple, un premier opérateur de projection peut être utilisé, qui modifie un quadrangle ABCD arbitraire en le déformant en un quadrangle alignable $A_2B_2C_2D_2$ avec un faible déplacement de ses sommets. Cette déformation, illustrée sur la figure 5, est appelée une projection et est calculée en deux étapes.

**Etape 1 : Projection du 1er ordre de B et D**

Il est à noter que rendre un quadrangle alignable équivaut à minimiser l'énergie :

$$E_{al} = (AB + BC - CD - DA)^2 = e^2 \ (3) \ ;$$

Où e= AB+BC-CD-DA est appelée l'erreur d'alignement. Elle vaut 0 pour un quadrangle alignable, et est positive sinon. L'application 10 choisit les directions de projection en B et D en fonction de l'opposé du gradient de cette quantité. Cette direction correspond aux bissectrices du quadrangle :

$$\nabla_B E_{al} = e\left(\frac{\vec{AB}}{AB} + \frac{\vec{CB}}{CB}\right)(4) \ ;$$

$$\nabla_D E_{al} = e\left(\frac{\vec{DC}}{DC} + \frac{\vec{DA}}{DA}\right)(5) \ ;$$

Il est à noter l'importance du signe e. Sur la figure 5, AB+BC>CD+DA, par conséquent e>0. L'application 10 appelle $u_B$ et $u_D$ ces deux directions qui se coupent en deux (figure 5). Il est choisi par convention $l_1 = AB + BC$, $l_2 = AD + DC$ et leur valeur moyenne $l_m = (l_1 + l_2)/2$. L'application 10 recherche ensuite les points $B' = B + t_B u_B, t_B \in \mathbb{R}$ et $D' = D + t_D u_D, t_D \in \mathbb{R}$ de sorte que :

$$AB' + B'C = CD' + D'A = l_m \ (6) \ ;$$

Cela équivaut à projeter B et D sur un ellipsoïde de révolution $E_r$ avec pour foyers A et C et qui soit le plus proche possible d'à la fois B et D. Cela revient à résoudre en $t_B$ et $t_D$ :

$$dist(B + t_B\,u_B, A) + dist(D + t_B\,u_B, A) = l_m \ (7) \ ;$$

$$dist(D + t_D\,u_D, A) + dist(D + t_D\,u_D, A) = l_m \ (8) \ ;$$

Ces deux équations sont non linéaires. Une résolution exacte n'est cependant pas nécessaire étant donné la méthode itérative utilisée (voir les détails ci-après). L'application 10 résout donc ces équations au premier ordre en les linéarisant à $t_B=0$ et $t_D=0$. L'application 10 évalue les pentes par un schéma de différence discrète. Les solutions donnent les points $B_1$ et $D_1$, qui se trouvent approximativement sur l'ellipse Er.

**Étape 2 : Correction du corps rigide**

Dans une deuxième étape, il est appliqué une translation aux quatre points $A, B_1, C, D_1$ par un vecteur d. Cela donne les points $A_2 B_2 C_2 D_2$. L'application 10 choisit d de telle sorte que le centre de gravité de ces quatre points $A_2 B_2 C_2 D_2$ coïncide avec le centre de gravité des quatre points initiaux. Ce faisant, les points A et C se déplacent dans une direction qui se rapproche du gradient de $E_{al}$, donné par :

$$\nabla_A E_{al} = e \left( \frac{\overrightarrow{BA}}{BA} + \frac{\overrightarrow{AD}}{AD} \right) (9) \; ;$$

$$\nabla_C E_{al} = e \left( \frac{\overrightarrow{BC}}{BC} + \frac{\overrightarrow{CD}}{CD} \right) (10) \; ;$$

La direction de projection est donc proche de celle suivie par un algorithme de descente de gradient sur $E_{al}$.

Les projections itératives sont alors effectuées par l'application 10, quadrangle 16 après quadrangle 16, par itérations des deux étapes détaillées ci-dessous (qui sont similaires à celles présentées dans Bouaziz et al. 2012 : « Shape-Up : Shaping Discrète Geometry with Projections » et dans et Deuss et al 2015 : « ShapeOp-A Robust and Extensible Geometric Modelling Paradigm ») :

- étape locale : une forme candidate est calculée pour chaque ensemble de points qui sont communément influencés par une contrainte. Pour une contrainte géométrique, cela revient à donner aux points une forme qui satisfait à la contrainte. Pour une contrainte physique, cela revient à trouver les positions de points les plus proches qui ont un potentiel physique (par exemple, une énergie de déformation élastique) nul.
- étape globale : les formes candidates calculées dans l'étape locale sont en général incompatibles. L'étape globale résout un nouvel ensemble de positions de points cohérentes de sorte que chaque ensemble de points soumis à une contrainte commune soit aussi proche que possible de la forme candidate correspondante.

En pratique, les contraintes géométriques sont encodées par des projections effectuées par différents opérateurs de projections (dont l'opérateur de projection décrit ci-dessus), de telles projections étant appliquées à l'étape locale. Ces projections permettent en particulier de contrôler la position des sommets représentant les points d'ancrage de la structure, de modéliser le comportement flexionnel et torsionnel des poutres, de limiter les variations de longueurs d'arête, et de faire en sorte que le maillage soit proche d'une surface de référence.

L'étape globale est typiquement réalisée en effectuant une minimisation de type moindres carrés pondérés, cette minimisation portant sur les distances reliant chaque point aux lieux où il a été projeté pour chaque contrainte. Cette étape globale donne une géométrie qui ne vérifie qu'approximativement les contraintes souhaitées, c'est pourquoi des itérations sont nécessaires. Le fait que la projection effectuée via l'opérateur de projection décrit précédemment soit approximative n'est donc pas un problème, d'autant plus que cette approximation devient de plus en plus précise à mesure que l'algorithme converge (B et D sont alors de plus en plus proches de l'ellipsoïde de révolution $E_r$).

De préférence, selon ce premier mode de réalisation, un second opérateur de projection est utilisé au cours de l'étape de génération 20, ce second opérateur de projection étant apte à déformer tout maillage à quadrangles discrétisé 12 de sorte que les arêtes 19 du maillage 12 correspondent à des lignes pseudo-géodésiques 22. Une ligne pseudo-géodésique est définie comme étant une ligne sur une surface de référence dont l'angle entre le plan osculateur et la normale à la surface est identique en chaque point. De telles lignes pseudo-géodésiques 22 sont par exemple visibles sur la figure 6, dans le cas où la surface de référence est une sphère. Le maillage 14 obtenu à l'issue de la première étape de génération 20 est alors un maillage alignable constitué d'arêtes 19 qui suivent des lignes pseudo-géodésiques.

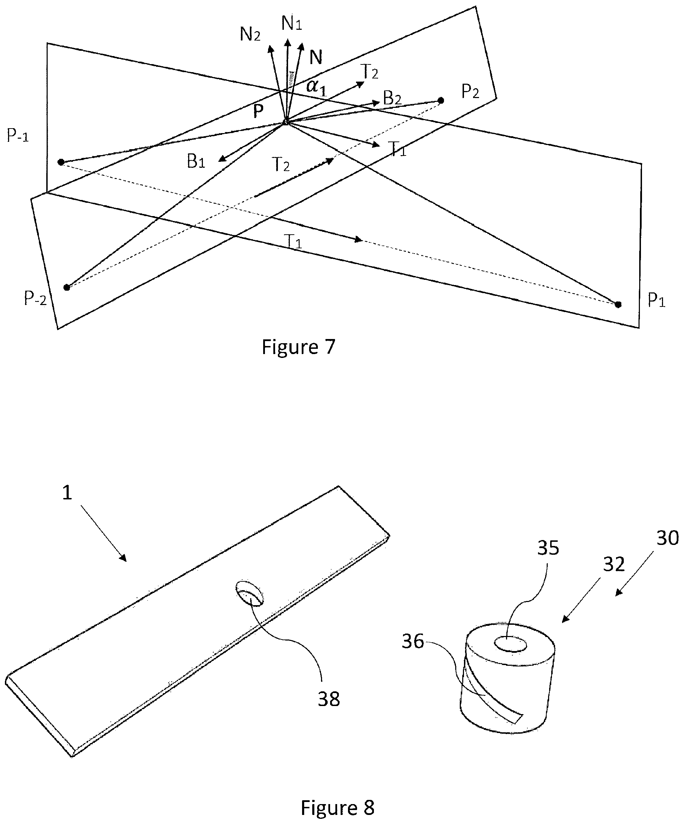

On introduit ci-dessous, en regard de la figure 7, un modèle pour la génération de lignes pseudo-géodésiques discrètes.

L'application 10 décompose d'abord des polylignes orientées en famille 1 et famille 2. L'application 10 nomme les voisins d'un sommet ou nœud P respectivement $P_1, P_{-1}$ dans le sens 1 et $P_2, P_{-2}$ dans le sens 2 (voir figure 7).

L'application 10 définit ensuite le repère de Frenet discret au point P :

- Vecteurs tangents :

$$\overrightarrow{T_1} = \frac{\overrightarrow{P_{-1}P_1}}{P_{-1}P_1} \; ; \; \overrightarrow{T_2} = \frac{\overrightarrow{P_{-2}P_2}}{P_{-2}P_2}$$

- Vecteurs binormaux :

$$\overrightarrow{B_1} = b_1 \frac{\overrightarrow{P_{-1}P} \wedge \overrightarrow{P_{-1}P_1}}{\left\| \overrightarrow{P_{-1}P} \wedge \overrightarrow{P_{-1}P_1} \right\|} \; ; \; \overrightarrow{B_2} = b_2 \frac{\overrightarrow{P_{-2}P} \wedge \overrightarrow{P_{-2}P_2}}{\left\| \overrightarrow{P_{-2}P} \wedge \overrightarrow{P_{-2}P_2} \right\|}$$

Où $b_1 = \pm 1$ et $b_2 = \pm 1$, le signe étant choisi pour obtenir une orientation consistante des binormales avec celles des sommets voisins.

- Vecteurs normaux :

$$\overrightarrow{N_1} = \frac{\overrightarrow{B_1} \wedge \overrightarrow{T_1}}{\left\| \overrightarrow{B_1} \wedge \overrightarrow{T_1} \right\|} \; ; \; \overrightarrow{N_2} = \frac{\overrightarrow{B_2} \wedge \overrightarrow{T_2}}{\left\| \overrightarrow{B_2} \wedge \overrightarrow{T_2} \right\|}$$

L'application 10 définit également le vecteur normal à la surface approchée par le réseau de courbes par :

$$\vec{N} = \frac{\overrightarrow{T_1} \wedge \overrightarrow{T_2}}{\left\| \overrightarrow{T_1} \wedge \overrightarrow{T_2} \right\|}$$

L'application 10 définit les réseaux de pseudo-géodésiques discrètes comme les réseaux pour lesquelles les angles $\alpha_1 = \vec{N} \sphericalangle \overrightarrow{N_1}$ et $\alpha_2 = \vec{N} \sphericalangle \overrightarrow{N_2}$ sont constants.

Ensuite, à chaque itération de l'étape globale décrite ci-dessus, l'application 10 met en œuvre les projections suivantes, via le second opérateur de projection :

- l'application 10 définit des angles cibles $\alpha_1$ et $\alpha_2$ d'inclinaison des poutres par rapport à une surface de référence (cette surface est abstraite : elle n'est pas construite)) ;
- en chaque point P :

  - l'application 10 calcule les vecteurs tangents $\overrightarrow{T_1} = \frac{\overrightarrow{P_{-1}P_1}}{P_{-1}P_1} \; ; \; \overrightarrow{T_2} = \frac{\overrightarrow{P_{-2}P_2}}{P_{-2}P_2}$

  - l'application 10 calcule la normale $\vec{N} = \frac{\overrightarrow{T_1} \wedge \overrightarrow{T_2}}{\left\| \overrightarrow{T_1} \wedge \overrightarrow{T_2} \right\|}$

- l'application 10 calcule ensuite le plan osculateur cible $Plan_{oc1}$:

  - l'application 10 calcule le vecteur $\overrightarrow{N_{oc1}}$ par rotation du vecteur $\vec{N}$ d'un angle $\alpha_1$ autour de $\overrightarrow{T_1}$
  - l'application 10 calcule le point $G_1$ comme le barycentre à poids identique des points $P, P_1, P_{-1}$
  - l'application 10 définit le plan $Plan_{oc1}$ comme le plan passant par $G_1$ et orienté par les vecteurs $\overrightarrow{T_1}$ et $\overrightarrow{N_{oc1}}$.

- l'application 10 effectue ensuite les mêmes opérations pour construire le plan $Plan_{oc2}$ :

  - l'application 10 calcule le vecteur $\overrightarrow{N_{oc2}}$ par rotation du vecteur $\vec{N}$ d'un angle $\alpha_2$ autour de $\overrightarrow{T_2}$.
  - l'application 10 calcule le point $G_2$ comme le barycentre à poids identique des points $P, P_2, P_{-2}$
  - l'application 10 définit le plan $Plan_{oc2}$ comme le plan passant par $G_2$ et orienté par les vecteurs $\overrightarrow{T_2}$ et $\overrightarrow{N_{oc2}}$.

- finalement, les projections appliquées par l'application 10 sont les suivantes

  - l'application 10 projette les points $P$, $P_1$, $P_{-1}$ sur le plan $Plan_{oc1}$ ;
  - l'application 10 projette les points $P$, $P_2$, $P_{-2}$ sur le plan $Plan_{oc2}$ ;

On obtient donc deux projections différentes calculées pour le point P, qui sont combinées dans l'étape globale décrite ci-dessus.

Selon un deuxième mode de réalisation de l'invention, la première étape de génération 20 comporte une phase, effectuée par l'application 10, consistant en une méthode de minimisation algorithmique d'une fonction ayant plusieurs variables et plusieurs termes. Les variables de la fonction sont la géométrie du maillage initial à quadrangles discrétisé 12. Les nœuds 18 du maillage sont indexés $\{P_{i,j}, (i,j) \in I, I \subset Z^2\}$. L'un des termes de la fonction est une énergie représentative du caractère alignable du maillage, par exemple une énergie définie de la manière suivante :

$$E_{alignable} = \sum_{quadrangles} \left(P_{i,j}\,P_{i+1,j} + P_{i+1,j}P_{i+1,j+1} - P_{i,j}P_{i,j+1} - P_{i,j+1}P_{i+1,j+1}\right)^2$$

(3) ;

L'énergie $E_{alignable}$ est la même que l'énergie $E_{al}$ définie précédemment. Le minimum de l'énergie $E_{alignable}$ est atteint si le maillage 14 est alignable, chacun des autres termes de la fonction étant représentatif de propriétés géométriques ou mécaniques souhaitées pour la structure tridimensionnelle 2.

Selon un autre mode de réalisation particulier (non illustré sur les figures), le maillage alignable 14 est généré au cours de l'étape 20 non plus à partir d'un maillage initial à quadrangles discrétisé, mais via les phases successives suivantes :

- au cours d'une première phase, l'application 10 définit une première ligne pseudo-géodésique sur une surface de révolution. Une telle ligne pseudo-géodésique peut être tracée par exemple par la méthode décrite dans Jiang et al 2019 « Curve-Pleated Structures » : pour un point et une direction de départ donnés sur la surface, on arrive à construire par intégration une ligne pseudo-géodésique partant du point et dont la tangente initiale coïncide avec la direction voulue ;
- au cours d'une deuxième phase, l'application 10 duplique cette première ligne pseudo-géodésique par des rotations autour de l'axe de révolution de la surface de révolution, telles que les angles de ces rotations forment une suite algébrique (par exemple 0°, 10°, 20°, ... 90°). Ces courbes fournissent ainsi un premier ensemble de lignes pseudo-géodésiques ;
- au cours d'une troisième phase, les lignes pseudo-géodésiques obtenues lors de la seconde phase sont symétrisées par rapport à un plan contenant l'axe de révolution, fournissant un deuxième ensemble de lignes pseudo-géodésiques.

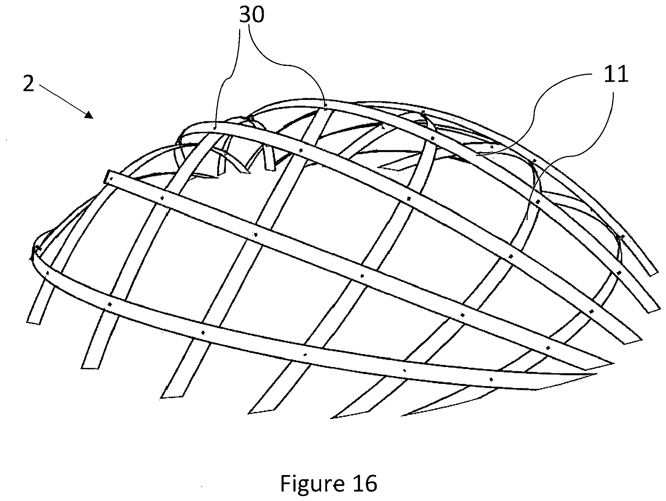

Les premier et deuxième ensembles de lignes pseudo-géodésiques constituent alors le maillage alignable 14. Contrairement aux cas précédents, les arêtes 19 de ce maillage 14 sont courbes, et constituent ainsi une meilleure approximation de la géométrie d'un gridshell. On pourra ne retenir qu'une portion du maillage ainsi généré pour la géométrie de la structure finale. Un exemple de structure finale 2 obtenue via le procédé selon ce mode de réalisation particulier est par exemple visible sur la figure 16.

De préférence, le procédé comporte une étape suivante 24, mise en œuvre par l'unité de traitement 6 de l'ordinateur 4. L'étape 24 comporte une première phase 24a de modélisation d'éléments additionnels tels que des contreventements, entretoises ou câbles additionnels présents sur la structure 2, et une seconde phase 24b au cours de laquelle une ou plusieurs contrainte(s) portant sur la géométrie du maillage alignable 14 sont relâchées. Ces contraintes sont relâchées au cours de la seconde phase 24b afin d'obtenir une géométrie de maillage 14 permettant d'atteindre un équilibre structurel pour la structure 2 prenant en compte les éléments additionnels décrits ci-dessus. En variante non représentée, l'étape de relâchement 24 est effectuée en parallèle de l'étape 20 de génération d'un maillage alignable 14.

Avantageusement, la seconde phase 24b de relâchement d'une ou plusieurs contrainte(s) portant sur la géométrie du maillage alignable 14 comprend la mise en œuvre d'un modèle de mécanique des poutres, en particulier un modèle de dynamiques projectives, de relaxation dynamique ou d'éléments finis de la mécanique des poutres tel que par exemple un modèle prenant en compte le comportement axial, la torsion et la flexion biaxiale ; et/ou la mise en œuvre d'un modèle pour imposer des contraintes de position aux bords. Cette seconde phase 24b de relâchement d'une ou plusieurs contrainte(s) permet notamment de modéliser les ancrages, la mécanique des poutres 11 et la charge de poids propre pour la structure 2. Si un nombre suffisant d'ancrages et de contreventements est fourni pour la structure 2, la géométrie dévie relativement peu à cette seconde phase 24b.

Le procédé comporte une étape suivante 26 de fabrication de la structure tridimensionnelle 2. La structure tridimensionnelle 2 est fabriquée à partir du maillage alignable 14 obtenu à l'issue de la première étape de génération 20. Plus précisément, la structure 2 se présente dans sa première configuration compacte (illustrée par exemple sur les figures 12 et 14) sous la forme d'une préforme quasi-linéaire, en forme de fagot. La préforme quasi-linéaire peut présenter une forme tubulaire (par exemple sensiblement cylindrique ou conique), ou non tubulaire. La préforme quasi-linéaire comporte des poutres élastiquement déformables 11, reliées entre elles via des connecteurs de liaison 30. Les nœuds 18 du maillage alignable 14 définissent des positions pour les connecteurs de liaison 30 entre les poutres 11. A l'issue de l'étape 24 de relâchement de contrainte(s), des entretoises diagonales, des contreventements ou des câbles (non représentés sur les figures) peuvent être ajoutés au sein de la structure 2.

Le maillage alignable 14 constitue ainsi une approximation de la géométrie de la structure tridimensionnelle déployable ou gridshell 2. Les arêtes 19 représentent les poutres 11, tandis que les nœuds 18 représentent les connecteurs de liaison 30. L'hypothèse principale de ce modèle est que, dans la seconde configuration déployée de la structure 2, la longueur curviligne entre deux connexions 30 est approximée par la distance euclidienne les séparant. C'est une approximation satisfaisante si la maille élémentaire de la structure 2 est suffisamment fine (l'erreur étant alors du second ordre). Il n'y a cependant pas d'approximation dans la première configuration compacte, quasi-linéaire.

Dans l'exemple de réalisation préférentiel selon lequel le maillage 14 obtenu à l'issue de la première étape de génération 20 est un maillage alignable constitué d'arêtes 19 qui suivent des lignes pseudo-géodésiques, les poutres 11 de la structure 2 sont disposées de manière à suivre les lignes pseudo-géodésiques définies par ce maillage alignable 14. Dans ce cas, les poutres 11 sont préférentiellement des profilés ou des barres plates. Par « profilé » ou « barre plate » on entend toute poutre à section rectangulaire ou tout autre type de section, ayant une inertie significativement plus forte dans une direction que dans une autre. Ce type de poutre se courbe ainsi facilement dans une direction, mais pas dans l'autre. De plus, la raideur en torsion de la poutre est relativement faible. Les lignes pseudo-géodésiques définies par les arêtes 19 du maillage alignable 14 sont utilisées pour déterminer les longueurs entre connecteurs de liaison 30 sur chaque poutre 11.

Par exemple, en revenant à la figure 7, les profilés ou barres plates 11 peuvent être placés en suivant les arêtes 19 du maillage 14, de sorte que, pour chaque profilé ou barre plate 11 :

- la ligne de centre du profilé ou de la barre plate 11 soient alignée avec les vecteurs $\overrightarrow{T_1}$ ; $\overrightarrow{T_2}$ ;
- l'axe d'inertie faible de la section du profilé ou de la barre plate 11 soit dans la direction $\overrightarrow{B_1}$; $\overrightarrow{B_2}$;
- l'axe d'inertie fort de la section du profilé ou de la barre plate 11 soit dans la direction $\overrightarrow{N_1}$; $\overrightarrow{N_2}$.

On a représenté sur les figures 8 à 11 un mode de réalisation particulier pour les connecteurs 30 de liaison entre les poutres 11 de la structure 2, autorisant une variation d'angle sans glissement entre ces poutres 11. Selon ce mode de réalisation particulier, chaque connecteur de liaison 30 est un connecteur reliant deux poutres 11 et autorisant une rotation entre ces deux poutres 11 selon un seul degré de liberté. Les poutres 11 sont préférentiellement des profilés ou des barres plates. Ce mode de réalisation particulier des connecteurs de liaison 30 est en effet particulièrement adapté à l'exemple de réalisation préférentiel selon lequel le maillage 14 obtenu à l'issue de la première étape de génération 20 est un maillage alignable constitué d'arêtes 19 qui suivent des lignes pseudo-géodésiques.

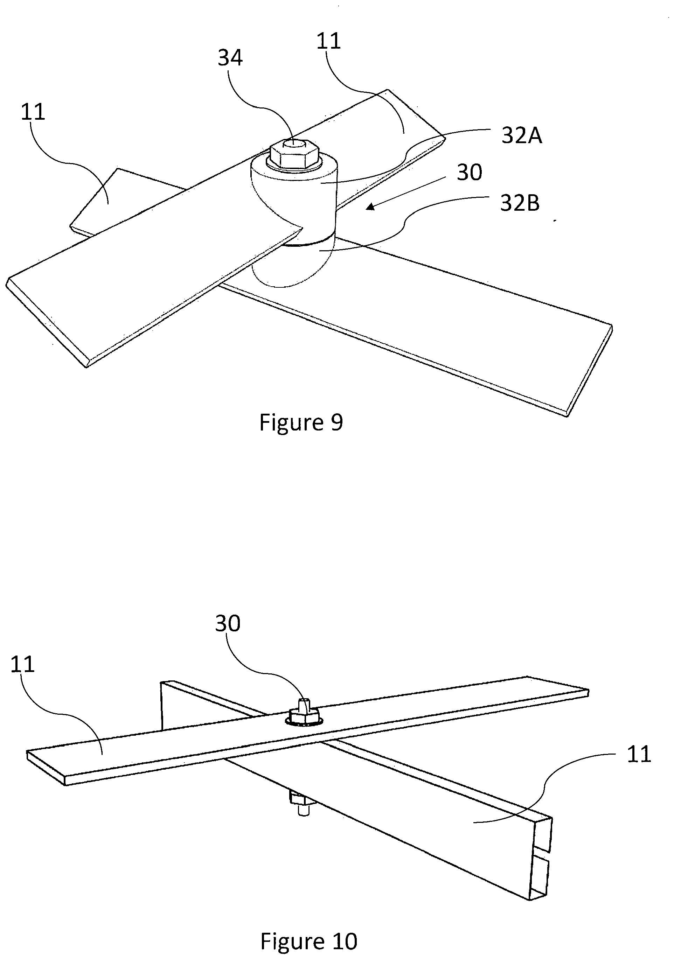

Plus précisément, et selon un premier exemple représenté sur les figures 8 et 9, chaque connecteur 30 est constitué de deux pièces 32 montées pivotantes l'une par rapport à l'autre autour d'un axe commun 34. Les deux pièces 32, par exemple cylindriques, sont agencées l'une sur l'autre et sont traversées par l'axe 34 (un alésage longitudinal 35 est par exemple prévu dans chaque pièce 32 pour recevoir l'axe 34). Chaque pièce 32 est configurée pour recevoir et maintenir une poutre 11, typiquement au moyen d'une fente oblique de réception et de maintien 36 ménagée dans la pièce 32 et débouchant à l'extérieur de la pièce 32. Chaque pièce 32 peut par exemple être réalisée à partir d'un tube initial de forte épaisseur, en découpant ce tube et en y pratiquant la fente oblique 36 par un trait de scie en biais. Chaque pièce 32 affecte ainsi une géométrie de cale biaise percée. De cette façon, les plans d'extension des deux poutres 11 reliées par le connecteur de liaison 30 s'intersectent en formant entre eux un angle non nul, par exemple un angle sensiblement égal à 30 degrés. Un tel angle non nul confère une bonne résistance mécanique à la structure 2. Le résultat d'ensemble pour la structure 2 est par exemple visible sur la figure 16, où la structure 2 selon cet exemple de réalisation particulier forme une sorte de dôme pseudo-géodésique. Un tel dôme est particulièrement intéressant en ce qu'il se déploie naturellement et très facilement vers sa configuration déployée, quasiment « tout seul ». Ceci permet de s'affranchir de l'utilisation de supports temporaires de types tirants, câbles ou échafaudages.

Selon cet exemple de réalisation particulier représenté sur les figures 8 et 9, les profilés ou barres plates 11 peuvent être connectés de la manière suivante afin qu'ils suivent les lignes pseudo-géodésiques définies par les arêtes 19 du maillage alignable 14 :

- un trou 38 est percé de façon oblique ou perpendiculaire dans les profilés ou barres plates 11. Le trou 38 est par exemple centré sur l'axe de symétrie de chaque profilé ou barre plate 11, ou bien décentré (tel qu'illustré sur la figure 9) ;
- les profilés ou barres plates 11 sont assemblés à l'aide d'un axe 34 et de deux pièces 32 telles que représentés sur les figures 8 et 9, ou avec toute autre géométrie de cale biaise percée. Chaque profilé ou barre plate 11 est maintenu en place dans la fente oblique 36 d'une pièce respective 32A, 32B. L'axe 34 traverse les deux pièces 32A, 32B ainsi que les deux profilés ou barres plates 11 via leurs trous 38 respectifs ;
- le tout est maintenu en place à l'aide par exemple d'un boulon (non représenté), qui autorise donc la rotation de la partie haute formée par la première pièce 32A et solidaire d'un premier profilé ou barre plate 11, par rapport à la partie basse formée par la seconde pièce 32B et solidaire d'un second profilé ou barre plate 11.

Selon un deuxième exemple de réalisation représenté sur la figure 10, chaque connecteur 30 est constitué d'un axe de pivot de type boulon ou rivet. Selon ce deuxième exemple de réalisation, les profilés ou barres plates 11 de la structure 2 reliés par un même connecteur 30 sont disposés de telle sorte que leurs plans d'extension forment un angle sensiblement perpendiculaire, un(e) des profilés ou barres plates 11 étant disposé(e) perpendiculairement et transversalement à l'autre. Dans ce cas, un des profilés ou barres plates 11 est disposé transversalement à la surface de référence (surface utilisée pour la génération des lignes pseudo-géodésiques - et qui n'est pas représentée sur la figure 10) de sorte que son plan d'extension forme avec cette surface de référence un angle sensiblement égal à 90 degrés. Ce profilé ou barre plate 11 suit alors une ligne asymptotique définie par le maillage alignable 14. L'autre profilé ou barre plate 11, disposé de manière à ce que l'angle entre son plan d'extension et la surface de référence soit nul, suit de son côté une ligne géodésique définie par le maillage alignable 14.

Selon un troisième exemple de réalisation représenté sur la figure 11, chaque poutre 11 est composée de deux profilés tubulaires à section rectangulaire 40, de sorte que les deux profilés 40 d'une poutre 11 qui s'étendent dans une direction prennent en sandwich un des profilés 40 de l'autre poutre 11 qui s'étend dans l'autre direction. Chaque connecteur 30 est constitué d'un axe pivot de type boulon ou rivet. Les percements prévus dans les profilés 40 sont éventuellement excentrés. Avec un excentrement constant, les poutres 11 suivent ainsi les lignes pseudo-géodésiques définies par les arêtes 19 du maillage alignable 14.

Selon un autre exemple de réalisation, non représenté sur les figures, chaque connecteur 30 est constitué d'un axe de pivot de type boulon ou rivet, et les profilés ou barres plates 11 de la structure 2 reliés par un même connecteur 30 sont disposés de telle sorte que leurs plans d'extension respectifs forment chacun un angle sensiblement nul avec la surface de référence. Dans ce cas, les deux profilés ou barres plates 11 suivent des lignes géodésiques définies par le maillage alignable 14.

Selon un autre exemple de réalisation encore, non représenté sur les figures, chaque connecteur 30 est constitué d'un axe de pivot de type boulon ou rivet, et les profilés ou barres plates 11 de la structure 2 reliés par un même connecteur 30 sont disposés de telle sorte que leurs plans d'extension respectifs forment chacun un angle sensiblement perpendiculaire avec la surface de référence. Dans ce cas, les deux profilés ou barres plates 11 suivent des lignes asymptotiques définies par le maillage alignable 14.

Selon un mode de réalisation alternatif non représenté sur les figures, chaque connecteur de liaison 30 est un connecteur reliant deux poutres 11 et autorisant une rotation entre ces deux poutres selon trois degrés de liberté. Chaque connecteur 30 est par exemple formé d'un axe et de deux cales biaises, les deux cales biaises étant positionnées entre les poutres et étant traversées par l'axe. Chaque cale biaise supporte une des poutres et est configurée pour pouvoir tourner en rotation par rapport à cette poutre (au contraire des cales biaises 32A, 32B de la figure 9 qui sont chacune solidaires d'une poutre 11, et qui ne permettent donc qu'un seul degré de liberté en rotation entre ces poutres 11).

Selon une réalisation possible de l'invention, le procédé comporte une étape finale 28 au cours de laquelle, à partir de la préforme quasi-linéaire représentée aux figures 12 et 14, on déforme le maillage de manière à obtenir une forme finale évasée correspondant à la seconde configuration déployée de la structure 2, une telle forme finale évasée étant représentée par exemple aux figures 12 à 15. La forme finale évasée est par exemple une forme en corolle. Une telle structure 2 avec une forme de corolle peut par exemple être intégrée au sein d'un groupe de structures tridimensionnelles de type gridshell, fabriquées ou non via le procédé selon l'invention. Les structures tridimensionnelles sont alors reliées entre elles, de préférence dans leurs zones de plus grande envergure.

Cette forme finale, qui va en s'évasant depuis la base B1, vers la partie supérieure S1 de la structure 2, est par exemple obtenue au moyen de plusieurs tirants (non représentés) reliant le bord supérieur de la partie supérieure S1 au sol. En variante, dans l'exemple de réalisation préférentiel selon lequel le maillage 14 obtenu à l'issue de la première étape de génération 20 est un maillage alignable constitué d'arêtes 19 qui suivent des lignes pseudo-géodésiques, la forme finale est obtenue par auto-déploiement de la structure 2.

De tels tirants peuvent comprendre par exemple des câbles métalliques, fixés au sol par des crochets (non représentés). Une fois que l'on a conféré au maillage la forme finale évasée souhaitée, représentée sur les figures 12 à 15, on fige cette forme par la mise en place de cerclages, d'entretoises et/ou de câbles fixés aux poutres 11 de la structure 2 sans possibilité de glissement (de tels cerclages, entretoises ou câbles n'étant pas représentés). On obtient de la sorte un gridshell élastique, tel que défini plus haut. Une fois que ces cerclages et/ou ces entretoises et/ou ces câbles ont été fixé(e)s sur la structure 2, cette structure peut conserver sa forme évasée représentée sur les figures 12 à 15, sans qu'il soit nécessaire de la relier à un support extérieur.

On notera qu'une autre manière possible de procéder, permettant de s'affranchir de la mise en place de tirants, est de monter la structure 2 selon l'invention à l'envers, c'est-à-dire avec sa partie évasée S1 posée sur le sol. Une fois les cerclages et/ou entretoises et/ou câbles mis en place, on retourne alors la structure 2 de manière à l'amener dans sa position finale, telle que représentée aux figures 12 et 14, c'est-à-dire avec la partie évasée S1 située vers le haut.

Comme on peut le comprendre à la lumière de la description qui précède, le procédé de fabrication selon l'invention permet d'obtenir de manière simple une structure en gridshell élastique compacte présentant une forte résistance structurelle combinée à une facilité de déploiement et de transport. Il permet en outre d'atteindre de toutes nouvelles formes géométriques pour la structure, non encore obtenues via les procédés de fabrication de l'art antérieur. De telles formes géométriques s'appuient sur l'obtention de maillages discrétisés dits alignables, qui forment des grilles irrégulières et sont générés à l'issue de la première étape du procédé.

Une très grande variété de formes nouvelles peut être obtenue pour la structure en gridshell élastique. Des exemples (non limitatifs) de telles formes nouvelles sont représentées aux figures 12 à 16.

Par comparaison avec la génération de maillages de type Tchebychev, pour lesquels une contrainte par arête est imposée, la génération de tels maillages alignables impose une contrainte par quadrangle. Or, un maillage à quadrangles discrétisé présente environ deux fois plus d'arêtes que de quadrangles. Ainsi, le caractère « alignable » d'un maillage correspond à deux fois moins de contraintes que pour un maillage de Tchebychev, pour la génération du maillage. La fabrication de structures à gridshell élastiques à partir de tels maillages alignables discrétisés offre par conséquent une bien plus grande liberté de conception, par comparaison avec la fabrication de telles structures à partir de maillages de Tchebychev.

A titre purement indicatif et non limitatif, une structure en gridshell élastique obtenue via le procédé selon l'invention peut mesurer entre un mètre et une dizaine de mètres, voire plusieurs dizaines de mètres, de haut.

La structure en gridshell élastique selon l'invention peut notamment trouver des applications dans les domaines de la construction, du mobilier urbain ou de l'architecture urbaine, du spatial, de la défense, des engins sous-marins, de l'événementiel ou des spectacles et divertissements.

## Revendications

1. Procédé de fabrication d'une structure tridimensionnelle (2), ladite structure tridimensionnelle (2) étant déployable entre une première configuration compacte et au moins une seconde configuration déployée, le procédé de fabrication comprenant :

   - une première étape (20), mise en œuvre par ordinateur (4), de génération d'un maillage (14), le maillage (14) comprenant une pluralité de quadrangles (16) discrétisés, et un nombre prédéterminé de nœuds (18) reliés entre eux par des arêtes orientées (19), une orientation prédéterminée étant attribuée à chaque arête (19) parmi deux orientations possibles, chaque quadrangle élémentaire (16) du maillage présentant une première paire d'arêtes opposées (19a) orientées selon une première orientation (S1), et une seconde paire d'arêtes opposées (19b) orientées selon une seconde orientation (S2), distincte de la première orientation (S1) ;
   - une deuxième étape (26) de fabrication de la structure tridimensionnelle (2), la structure tridimensionnelle (2) étant fabriquée à partir du maillage (14) généré à l'issue de la première étape (20) ; la structure tridimensionnelle (2) se présentant dans sa première configuration compacte sous la forme d'une préforme, ladite préforme comportant des poutres élastiquement déformables (11) ;

   **caractérisé en ce que** le maillage (14) généré au cours de la première étape (20) est un maillage dit alignable, un maillage à quadrangles discrétisé étant dit alignable si un tel maillage peut être déformé en une configuration rectilinéaire en modifiant angulairement le maillage au niveau de ses nœuds (18) et en maintenant les longueurs des arêtes (19) constantes, ou encore si, pour tout chemin orienté parcouru le long d'une boucle fermée (BF1) et composé de segments de chemin orientés ($e_1,...,e_n$), où chaque segment coïncide avec une arête (19) du maillage, l'équation suivante est vérifiée pour ce chemin :

   $$\sum_{i=1}^{n} \varepsilon_i \, \|e_i\| \, = 0 \; ;$$

   avec : $\varepsilon_i$ = +1 si le segment $e_i$ a la même orientation que l'arête coïncidente du maillage, et $\varepsilon_i$ = -1 sinon ; $\|e_i\|$ étant

la longueur du segment $e_i$;
et **en ce que** les nœuds (18) du maillage alignable (14) définissent des positions pour des connecteurs (30) de liaison entre les poutres (11) de la préforme, lesdits connecteurs (30) permettant de relier les poutres (11) entre elles lors de l'étape (26) de fabrication de la structure (2), la préforme étant dans sa configuration compacte quasi-linéaire, en forme de fagot.

2. Procédé selon la revendication 1, **caractérisé en ce que** le maillage alignable (14) est généré à partir d'un maillage initial à quadrangles discrétisé (12), le maillage alignable (14) étant obtenu par déformation des quadrangles (16) du maillage initial à quadrangles discrétisé (12), et **en ce que** la première étape de génération (20) consiste en une méthode d'optimisation numérique basée sur des projections itératives sur ledit maillage initial à quadrangles discrétisé (12), une desdites projections étant effectuée quadrangle (16) après quadrangle (16) au moyen d'un opérateur de projection apte à déformer tout quadrangle (16) en un quadrangle dit alignable, un quadrangle (16) étant dit alignable si, pour un chemin orienté parcouru le long d'une boucle fermée coïncidant avec les arêtes (19) du quadrangle (16), ladite équation est vérifiée.

3. Procédé selon la revendication 2, **caractérisé en ce que**, au cours de la première étape de génération (20), une des projections itératives est effectuée sur le maillage initial à quadrangles discrétisé (12) au moyen en outre d'un opérateur de projection additionnel, ledit opérateur additionnel étant apte à déformer tout maillage à quadrangles discrétisé de sorte que les arêtes (19) du maillage correspondent à des lignes pseudo-géodésiques (22), une ligne pseudo-géodésique étant définie comme une ligne sur une surface de référence dont l'angle entre le plan osculateur et la normale à la surface est identique en chaque point, le maillage obtenu à l'issue de la première étape de génération étant un maillage alignable (14) constitué d'arêtes (19) qui suivent des lignes pseudo-géodésiques (22), les poutres (11) de la structure tridimensionnelle (2) étant des profilés ou des barres plates disposés, au cours de la deuxième étape (26), de manière à suivre les lignes pseudo-géodésiques (22) définies par le maillage alignable (14).

4. Procédé selon la revendication 1, **caractérisé en ce que** le maillage alignable (14) est généré à partir d'un maillage initial à quadrangles discrétisé (12), le maillage alignable (14) étant obtenu par déformation des quadrangles (16) du maillage initial à quadrangles discrétisé (12), et **en ce que** la première étape de génération (20) comporte une phase consistant en une méthode de minimisation algorithmique d'une fonction ayant plusieurs variables et plusieurs termes, les variables de ladite fonction étant la géométrie du maillage initial à quadrangles discrétisé (12), l'un des termes de la fonction étant une énergie représentative du caractère alignable du maillage, par exemple une énergie définie de la manière suivante :

$$E_{alignable} = \sum_{quadrangles} \left( P_{i,j}\, P_{i+1,j} + P_{i+1,j}P_{i+1,j+1} - P_{i,j}P_{i,j+1} - P_{i,j+1}P_{i+1,j+1} \right)^2$$

;

les nœuds du maillage étant indexés $\{P_{i,j}, (i,j) \in I, I \subset Z^2\}$, le minimum de ladite énergie étant atteint si le maillage est alignable, chacun des autres termes de la fonction étant représentatif de propriétés géométriques ou mécaniques souhaitées pour la structure tridimensionnelle (2).

5. Procédé selon l'une quelconque des revendications 2 à 4, **caractérisé en ce que** le maillage initial à quadrangles discrétisé (12) est un maillage à symétrie de révolution ou un maillage de Tchebychev, en particulier du type maillage plan de Tchebychev.

6. Procédé selon la revendication 1, **caractérisé en ce que** la première étape (20) de génération d'un maillage alignable (14) comprend une première phase consistant à définir une première ligne pseudo-géodésique sur une surface de révolution, une ligne pseudo-géodésique étant définie comme une ligne sur une surface de référence dont l'angle entre le plan osculateur et la normale à la surface est identique en chaque point ; une deuxième phase consistant à dupliquer la première ligne pseudo-géodésique par rotation autour de l'axe de révolution de la surface de révolution, fournissant ainsi un premier ensemble de lignes pseudo-géodésiques, et une troisième phase consistant à symétriser les lignes pseudo-géodésiques obtenues lors de la seconde phase par rapport à un plan contenant ledit axe de révolution, fournissant un deuxième ensemble de lignes pseudo-géodésiques ; les premier et deuxième ensembles de lignes pseudo-géodésiques constituant le maillage alignable.

**7.** Procédé selon l'une quelconque des revendications précédentes, **caractérisé en ce qu'**il comprend en outre, avant la deuxième étape (26), une étape intermédiaire (24), mise en oeuvre par ordinateur (4), comprenant une première phase (24a) de modélisation d'éléments additionnels tels que des contreventements, entretoises ou câbles additionnels présents sur la structure (2), et une seconde phase (24b) de relâchement d'une ou plusieurs contrainte(s) portant sur la géométrie du maillage alignable (14), afin d'obtenir une géométrie de maillage permettant d'atteindre un équilibre structurel prenant en compte lesdits éléments additionnels ; cette étape intermédiaire (24) étant effectuée à la suite ou en parallèle de la première étape (20).

**8.** Procédé selon la revendication 7, **caractérisé en ce que** la seconde phase (24b) de relâchement d'une ou plusieurs contrainte(s) portant sur la géométrie du maillage alignable (14) comprend la mise en œuvre d'un modèle de mécanique des poutres, en particulier un modèle de dynamiques projectives, de relaxation dynamique ou d'éléments finis de la mécanique des poutres tel que par exemple un modèle prenant en compte le comportement axial, la torsion et la flexion biaxiale ; et/ou la mise en œuvre d'un modèle pour imposer des contraintes de position aux bords.

**9.** Produit programme d'ordinateur (10) téléchargeable depuis un réseau de communication et/ou enregistré sur un support lisible par ordinateur (4) et/ou exécutable par un processeur (7), **caractérisé en ce qu'**il comprend des instructions de programme, lesdites instructions de programme mettant en œuvre au moins l'étape (20) de génération du maillage alignable (14) du procédé selon l'une quelconque des revendications précédentes lorsque lesdites instructions sont exécutées sur une unité de traitement (6) d'un dispositif informatique (4).

**10.** Structure tridimensionnelle (2) déployable entre une première configuration compacte et une seconde configuration déployée, la structure tridimensionnelle (2) comprenant des poutres élastiquement déformables (11) reliées entre elles par des connecteurs de liaison (30), **caractérisée en ce que** la structure tridimensionnelle (2) est fabriquée via le procédé selon l'une quelconque des revendications 1 à 8.

**11.** Structure tridimensionnelle (2) selon la revendication 10, **caractérisé en ce que** la structure forme un élément parmi le groupe consistant en : un élément de mobilier urbain ou d'architecture urbaine, un module de satellite ou d'engin spatial, un module de sous-marin, un support, un abri temporaire ou non, un élément décoratif de spectacle et/ou de divertissement, un jouet, une armature de coque de béton armé, et un coffrage permanent ou temporaire de coque de béton.

**12.** Structure tridimensionnelle (2) selon la revendication 10 ou 11 lorsque la structure (2) est fabriquée via le procédé selon la revendication 3 ou 6, **caractérisée en ce que** chaque connecteur de liaison (30) au sein de la structure (2) est un connecteur reliant deux poutres (11) et autorisant une rotation entre ces deux poutres (11) selon un seul degré de liberté.

**13.** Structure tridimensionnelle (2) selon l'une quelconque des revendications 10 à 12, **caractérisée en ce que** chaque connecteur de liaison (30) au sein de la structure (2) est constitué de deux pièces (32, 32A, 32B) montées pivotantes l'une par rapport à l'autre autour d'un axe commun (34), les deux pièces (32, 32A, 32B) étant agencées l'une sur l'autre et étant traversées par l'axe (34), chaque pièce (32, 32A, 32B) étant configurée pour recevoir et maintenir une poutre (11), par exemple au moyen d'une fente oblique (36) de réception et de maintien ménagée dans la pièce (32, 32A, 32B), chaque pièce (32, 32A, 32B) affectant une géométrie de cale biaise percée.

**14.** Structure tridimensionnelle (2) selon la revendication 10 ou 11, **caractérisée en ce que** chaque connecteur de liaison (30) au sein de la structure (2) est un connecteur reliant deux poutres (11) et autorisant une rotation entre ces deux poutres (11) selon trois degrés de liberté, chaque connecteur étant formé d'un axe et de deux cales biaises, les deux cales biaises étant positionnées entre les poutres et étant traversées par l'axe, chaque cale biaise supportant une des poutres et étant configurée pour pouvoir tourner en rotation par rapport à ladite poutre.

**15.** Groupe de structures tridimensionnelles reliées entre elles, **caractérisé en ce qu'**au moins une des structures tridimensionnelles (2) est conforme à l'une quelconque des revendications 10 à 14, les structures étant de préférence reliées entre elles dans leur zone de plus grande envergure.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Europäisches
Patentamt

European
Patent Office

Office européen
des brevets

## RAPPORT DE RECHERCHE EUROPEENNE

Numéro de la demande

EP 21 31 5015

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | FR 3 080 390 A1 (ECOLE NAT DES PONTS ET CHAUSSEES [FR]) 25 octobre 2019 (2019-10-25) * page 5, ligne 3 - page 7, ligne 27; figures 1-11 * ----- | 1-15 | INV. E04B1/32 E04B1/58 |
| X | IT RM20 090 227 A1 (COLABELLA SOFIA; GRASSO FELICE; PARENTI BIANCA; PONE SERGIO) 9 novembre 2010 (2010-11-09) * alinéa [0008] - alinéa [0027]; figures 1-5 * ----- | 1-15 | |
| A,D | BOUHAYA LINA, BAVEREL OLIVIER, CARON JEAN-FRANÇOIS: "Optimization of gridshell bar orientation using a simplified genetic approach", STRUCTURAL AND MULTIDISCIPLINARY OPTIMIZATION, vol. 50, no. 5, novembre 2014 (2014-11), pages 839-848, XP002803554, ISSN: 1615-147X, DOI: 10.1007/s00158-014-1088-9 * le document en entier * ----- | 1-15 | DOMAINES TECHNIQUES RECHERCHES (IPC) E04B |

Le présent rapport a été établi pour toutes les revendications

| Lieu de la recherche | Date d'achèvement de la recherche | Examinateur |
|---|---|---|
| La Haye | 6 juillet 2021 | Melhem, Charbel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 31 5015

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-07-2021

| Document brevet cité au rapport de recherche | | Date de publication | Membre(s) de la famille de brevet(s) | | Date de publication |
|---|---|---|---|---|---|
| FR 3080390 | A1 | 25-10-2019 | AU | 2018419300 A1 | 12-11-2020 |
| | | | EP | 3761779 A1 | 13-01-2021 |
| | | | FR | 3080390 A1 | 25-10-2019 |
| | | | US | 2021153440 A1 | 27-05-2021 |
| | | | WO | 2019202219 A1 | 24-10-2019 |
| IT RM20090227 | A1 | 09-11-2010 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3080390 A1

**Littérature non-brevet citée dans la description**

- **LINA BOUHAYA et al.** *Optimization of gridshell bar orientation using a simplified genetic approach,* 2014
- **LAFUENTE HERNANDEZ et al.** *Topology optimisation of regular and irregular elastic gridshells by means of a non-linear variational method,* 2012
- *On the Design and Construction of Elastic Gridshells with Irregular Meshes,* 2013
- **BOUAZIZ et al.** *Shape-Up : Shaping Discrète Geometry with Projections,* 2012
- **DEUSS et al.** *ShapeOp-A Robust and Extensible Geometric Modelling Paradigm,* 2015
- **JIANG et al.** *Curve-Pleated Structures,* 2019